# FASCICULE DE BREVET EUROPEEN

(11) **EP 2 783 575 B1**
(45) Date de publication et mention de la délivrance du brevet: **31.05.2017**
(21) Numéro de dépôt: 14161697.9
(22) Date de dépôt: 26.03.2014
(51) Int. Cl.: A23J 1/00, A23J 1/10, A23K 40/00, A23K 10/26

(54) **Procédé de décontamination de produits animaux**
Verfahren zur Dekontamination von tierischen Produkten
Method for decontamination of animal products

(30) Priorité: 27.03.2013 FR 1352773
(43) Date de publication de la demande: 01.10.2014
(73) Titulaire: COMMISSARIAT À L'ÉNERGIE ATOMIQUE ET AUX ÉNERGIES ALTERNATIVES, 75015 Paris (FR)
(72) Inventeur: COMOY, Emmanuel, 91190 SAINT-AUBIN (FR); WODLING, Pascal, 92260 ANTONY (FR); DESLYS, Jean-Philippe, 78170 LA CELLE SAINT CLOUD (FR)
(74) Mandataire: Gevers & Orès

(56) Documents cités:
- WO-A1-02/39826
- FR-A5- 2 065 014
- GB-A- 1 567 773
- US-A- 5 087 474
- US-A- 5 780 288
- US-A1- 2004 152 881
- DATABASE FSTA [Online] INTERNATIONAL FOOD INFORMATION SERVICE (IFIS), FRANkFURT-MAIN, DE; ANONYMOUS: "Improvement in technology and quality of edible fats. (translated)", XP002726841, Database accession no. FS-1972-09-N-0434 & ANONYMOUS: "Improvement in technology and quality of edible fats. (translated)", VSESOYUZNYI NAUCHNO, vol. 24, 1970, pages 70-77, TRUDY, ISSLEDOVATEL'SKII INSTITUT MYASNOI PROMYSHLENNOSTI
- TAYLOR D M: "Inactivation of prions by physical and chemical means", JOURNAL OF HOSPITAL INFECTION, ACADEMIC PRESS, LONDON, GB, vol. 43, no. SUPPL, 1 janvier 1999 (1999-01-01), pages S69-S76, XP002977367, ISSN: 0195-6701, DOI: 10.1053/JHIN.1999.0630

## Description

### Domaine de l'invention

L'invention concerne un procédé de décontamination de produits animaux, notamment de sous-produits animaux destinés à la préparation de protéines animales transformées (PAT), en particulier vis-à-vis du prion.

### Arrière-plan technique

La France produit chaque année environ 3 millions de tonnes de déchets animaux, depuis les déchets de boucherie (classés C3 et provenant d'aliments propres à l'alimentation humaine) jusqu'aux cadavres des animaux récupérés à la ferme (C2) et les abats à risque de prion (C1).

Ces sous-produits animaux peuvent être utilisés pour la production de farines animales (farines de viandes et d'os), désormais nommées protéines animales transformées (PAT), qui représentent 700.000 tonnes par an (après récupération des graisses et évaporation de l'eau) en France. Ces chiffres sont à multiplier par 5 au niveau de l'Europe.

Toutefois, ces protéines à très haute valeur ajoutée sont difficiles à valoriser depuis la crise de la vache folle, même si cette maladie a virtuellement disparu en France et plus largement au niveau européen. En effet, les procédés habituels de transformation des sous-produits animaux en PAT, qui impliquent généralement un broyage, un chauffage à environ 80°C, un pressage pour éliminer la graisse et enfin un séchage, ne permettent pas de détruire le prion. En raison de cette sous-utilisation des PAT, le déficit en protéines de l'Europe s'est accru au profit principalement d'importation de soja génétiquement modifié. Il était ainsi estimé en 2011 que 70% de la consommation de l'Union Européenne (soit 42 millions de tonnes de matières premières riches en protéines végétales en 2009), essentiellement des farines de soja, étaient importés, en particulier pour l'alimentation animale. Qui plus est, d'après des rapports du parlement Européen, ces productions importées ne sont pas soumises aux mêmes contraintes environnementales, sanitaires et de réglementation sur les organismes génétiquement modifiés (OGM) que les productions européennes.

Par ailleurs, le développement de la pisciculture, qui semble indispensable pour nourrir les populations dans les années qui viennent, butte sur les difficultés d'approvisionnement en protéines de qualité et la situation actuelle aboutit à une surpêche de poissons sauvages transformés en farines de poisson (20 millions de tonnes de poissons sauvages par an) pour fournir des aliments adaptés.

Dans ce contexte, une revalorisation innovante des sous-produits animaux impliquant leur décontamination vis-à-vis des prions éventuellement présents leur permettrait de passer du statut de déchets à celui de matières premières à haute valeur ajoutée.

Cependant, les procédés habituels de décontamination du prion, tels qu'une immersion dans une solution d'hydroxyde de sodium (NaOH) 1N et autoclavage à 121°C pendant 30 minutes (recommandation de l'Organisation Mondiale de la Santé) ou ceux définis dans le Règlement (CE) n°1774/2002 du parlement européen et du conseil du 3 octobre 2002 établissant des règles sanitaires applicables aux sous-produits animaux non destinés à la consommation humaine, sont mal adaptées au traitement des sous-produits animaux dans le cadre de la production de PAT car ils induisent une dégradation de leurs qualités organoleptiques et nutritionnelles.

Ainsi, Brown et al. (2003) Proc. Natl. Acad. Sci. USA 100:6093-6097 ont été amenés à proposer un procédé adapté à la préparation PAT impliquant un chauffage à des températures de 121-137°C et des pulsations à ultra-haute pression (au moins 690 MPa), ce qui rend ce procédé difficilement industrialisable. La demande de brevet international WO02/39826 propose un procédé comprenant une étape de traitement alcalin à une température comprise entre 55°C et 99°C et une durée comprise entre 1 et 4 heures. Il reste donc encore à définir un procédé industrialisable de décontamination de sous-produits animaux en vue de la production de PAT, qui combine notamment efficacité vis-à-vis des prions et des autres agents pathogènes attendus dans ces produits, avec le maintien des qualités nutritionnelles et organoleptiques nécessaires à leur utilisation ultérieure.

### Résumé de l'invention

La présente invention découle de la mise en évidence inattendue, par les inventeurs, que la combinaison consécutive d'un traitement légèrement alcalin à l'aide d'une base faible, préférentiellement un sel de carbonate, et d'un traitement thermique à moins de 121°C permettait de décontaminer des préparations contenant des prions tout en étant compatible avec la préparation de PAT ayant des qualités organoleptiques et nutritionnelles convenables.

Sans vouloir être liés à une théorie particulière, les inventeurs pensent que la base faible combine une action déstabilisatrice du prion, au moins par le pH alcalin qu'elle procure, à une action d'hydratation du produit animal. L'agitation moléculaire consécutivement induite par un chauffage modéré conduit alors à une dégradation des prions.

Ainsi, la présente invention concerne un procédé de traitement décontaminant de produits animaux comprenant les étapes suivantes :
- une extraction des graisses desdits produits animaux, préalablement à la première étape ;
- une première étape de mise en contact desdits produits animaux dégraissés avec au moins une base faible ayant un pKa compris entre 9 et 12 pour former un mélange ;
- une deuxième étape comprenant au moins un chauffage principal du mélange à une température à coeur d'au moins 100°C et inférieure à 121 °C pendant une durée de 5 à 15 minutes, ledit chauffage principal étant un chauffage humide ;
dans lequel le pH du mélange à l'issue de la deuxième étape est supérieur ou égal à 9 et inférieur à 11.

La présente invention concerne également un procédé de traitement décontaminant de produits animaux comprenant les étapes suivantes :
- une extraction des graisses desdits produits animaux, simultanément à la première étape de mise en contact desdits produits animaux avec au moins une base faible ayant un pKa compris entre 9 et 12 pour former un mélange ;
- une deuxième étape comprenant au moins un chauffage principal du mélange à une température à coeur d'au moins 100°C et inférieure à 121°C pendant une durée de 5 à 15 minutes, ledit chauffage principal étant un chauffage humide ;
dans lequel le pH du mélange à l'issue de la deuxième étape est supérieur ou égal à 9 et inférieur à 11.

Le chauffage principal de la deuxième étape est un chauffage humide. La notion de chauffage humide est bien connue de l'homme du métier. Il s'agit de préférence d'un chauffage au cours duquel on limite l'évaporation d'eau du mélange, plus préférablement d'un chauffage réalisé à saturation de vapeur d'eau.

La présente invention concerne également un procédé de traitement décontaminant de produits animaux comprenant les étapes suivantes :
- une extraction des graisses desdits produits animaux, préalablement ou simultanément à la première étape ;
- une première étape de mise en contact desdits produits animaux avec au moins une base faible ayant un pKa compris entre 9 et 12 pour former un mélange, la quantité de la base faible et des formes acides ou basiques conjuguées de la base faible éventuellement mises en contact avec le produit animal conjointement à la base faible, rapportée au volume du mélange, est inférieure à 1 mol.L⁻¹ et d'au moins 50 mmol.L⁻¹ ;
- une deuxième étape comprenant au moins un chauffage principal du mélange à une température à coeur d'au moins 100°C et inférieure à 121°C pendant une durée de 5 à 15 minutes.

La présente invention concerne également (i) un procédé d'obtention de protéines animales transformées (PAT), comprenant la mise en oeuvre du procédé de traitement décontaminant défini ci-dessus, (ii) les PAT susceptibles d'être obtenus par la mise en oeuvre du procédé d'obtention de PAT selon l'invention, et (iii) l'utilisation des PAT susceptibles d'être obtenues par la mise en oeuvre du procédé d'obtention selon l'invention à titre d'engrais ou pour nourrir des animaux, notamment des poissons.

### Description détaillée de l'invention

### Produit animal

Un « produit animal » au sens de l'invention comprend, ou est constitué de, tout ou partie d'un cadavre animal ainsi que les matières sécrétées ou excrétées par un animal.

De préférence, le produit animal selon l'invention est un sous-produit animal.

Un « sous-produit animal » au sens de l'invention désigne un produit animal selon l'invention, propre ou impropre à la consommation humaine, mais non destiné à la consommation humaine, que ce soit en vertu du respect d'une législation ou pour des raisons commerciales. Ainsi, à titre d'exemple, un sous produit animal selon l'invention comprend, ou consiste en, du muscle, des viscères, de la peau, des sabots, des cornes, des plumes, des os, des coquilles, des cretons, du sang, du lait, les ovules, des embryons, du sperme, de la biomasse, du lisier, des résidus de méthanisation ou des mélanges de ceux-ci.

Les animaux dont sont issus les produits ou sous-produits animaux au sens de l'invention peuvent être des animaux de rente, tels que les bovins, les ovins, les caprins, les porcins, les oiseaux ou encore les poissons, ou d'autres animaux, tels que les chevaux, les animaux de compagnie, les arthropodes, notamment les insectes ou les crustacés, les reptiles, ou les mollusques.

De préférence, le produit animal est broyé préalablement à la première étape (avant ou après l'extraction des graisses) de manière à obtenir une taille de particules, ou granulométrie, moyenne inférieure à 100 mm, 50 mm ou 30 mm.

### Traitement décontaminant

Comme on l'entend ici, un « traitement décontaminant » ou une « décontamination » désigne la réduction de la quantité d'agents pathogènes éventuellement présents dans le produit animal. En particulier, le «traitement décontaminant selon l'invention consiste préférablement à réduire d'au moins 80%, 90%, 95%, 99%, 99,9%, 99,99%, ou 99,999% la quantité d'agent pathogène présent dans le produit à traiter selon l'invention.

Comme cela apparaitra clairement à l'homme du métier le procédé de traitement décontaminant selon l'invention n'est pas appliqué au corps d'un humain ou d'un animal vivant.

Les « agents pathogènes » selon l'invention peuvent être de tout type et sont notamment sélectionnés dans le groupe constitué d'un prion, d'un virus, d'une bactérie, d'un champignon, d'un protozoaire, et d'une spore de champignon ou de bactérie. De préférence, l'agent pathogène selon l'invention est un prion, une spore de bactérie, notamment du genre *Bacillus,* ou une mycobactérie. De manière particulièrement préférée, l'agent pathogène selon l'invention est un prion. Lorsque l'agent pathogène selon l'invention est un prion, la protéine constitutive du prion, ou PrP, se trouve essentiellement sous sa forme résistante, pathogène, PrPres.

### Base faible (ou solution alcaline)

Une « base » selon l'invention désigne un composé susceptible de capter un proton (H⁺) et/ou de libérer un ion hydrogénate (OH⁻) dans une solution qui la contient. Une base est dite faible si, lorsqu'elle est ajoutée à une solution, elle capte significativement moins d'ions H⁺ et/ou qu'elle génère significativement moins d'ions OH⁻ que la quantité de base qui est ajoutée à la solution, autrement dit la base faible ne se dissocie pas complètement en solution. Ainsi, la base faible selon l'invention doit bien être distinguée d'une base forte, telle que la potasse (KOH) ou la soude (NaOH). Par ailleurs, la base faible selon l'invention a un pKa compris entre 9 et 12, c'est-à-dire supérieur ou égal à 9 et inférieur ou égal à 12. De préférence, le pKa est inférieur ou égal à 12, 11,5 ou 11. De préférence également, le pKa est supérieur ou égal à 9, 9,5, ou 10. Comme on l'entend ici, la base faible selon l'invention peut avoir une ou plusieurs fonctions basiques. Lorsque la base faible selon l'invention comprend plusieurs fonctions basiques, le pKa selon l'invention est celui d'au moins l'une d'entre elles. Comme cela apparaitra clairement à l'homme du métier les valeurs de pKa selon l'invention sont de préférence celles mesurées dans les conditions de laboratoire de température et de pression, notamment à une température de 20°C à 25°C et à la pression atmosphérique, en particulier à une pression d'environ 1 bar.

La base faible peut être mise en contact seule ou associée avec au moins une des formes acides ou basiques conjuguées.

La base faible selon l'invention peut être de toute nature. Toutefois, on préfère que la base faible selon l'invention soit un sel de carbonate, notamment du carbonate de sodium ou du carbonate de potassium. De préférence, et comme l'homme du métier le comprendra bien, la base faible selon l'invention n'est pas du carbonate de calcium. Comme on l'entend ici, un sel de carbonate désigne un sel de CO₃²⁻, un sel de HCO₃⁻, ou une combinaison des deux.

De préférence, la quantité de la base faible et des formes acides ou basiques conjuguées de la base faible éventuellement mises en contact avec le produit animal conjointement à la base faible, rapportée au volume du mélange, est inférieure à 1 mol.L⁻¹ ou 0,5 mol.L⁻¹.

De préférence également, la quantité de la base faible et des formes acides ou basiques conjuguées de la base faible éventuellement mises en contact avec le produit animal conjointement à la base faible, rapportée au volume du mélange, est d'au moins 50 mmol.L⁻¹, 100 mmol.L⁻¹, 200 mmol.L⁻¹, 300 mmol.L⁻¹ ou 400 mmol.L⁻¹, plus préférentiellement d'au moins 100 mmol.L⁻¹.

Comme on l'entend ici, la quantité de la base faible et des formes acides ou basiques conjuguées de la base faible éventuellement mises en contact avec le produit animal conjointement à la base faible désigne la quantité de la totalité des formes acido-basiques de la base faible. Par exemple, lorsque la base faible est un sel de carbonate, la quantité de la base faible et des formes acides ou basiques conjuguées de la base faible éventuellement mises en contact avec le produit animal conjointement à la base faible désigne la somme du nombre de moles de CO₃²⁻, de HCO₃⁻, et de H₂CO₃ mis en contact avec le produit animal rapporté au volume du mélange.

Dans un mode de réalisation particulier de l'invention, la base faible est apportée sous forme de poudre.

Dans un autre mode de réalisation particulier de l'invention, la base faible est apportée sous forme de solution. Une « solution » selon l'invention est une solution aqueuse. Dans ce cas la solution de base faible présente préférentiellement un pH d'au moins 9,5, 10, 10,5, 11 ou 11,5. De préférence également, la solution présente un pH inférieur à 13, 12,5 ou 12. Par ailleurs, on préfère que le volume de la solution de base faible selon l'invention représente de 1% (volume/volume ou volume/masse) à 33% (volume/volume ou volume/masse) du volume du mélange selon l'invention.

Comme on l'entend ici, le pH est mesuré dans les conditions de laboratoire de température et de pression, notamment à une température de 20°C à 25°C et à la pression atmosphérique, en particulier à une pression d'environ 1 bar.

L'homme du métier sait parfaitement préparer une solution d'une concentration donnée d'une base faible à un pH particulier. Selon la base faible et le pH visé, on peut ajouter à la solution la base faible sous sa forme basique et/ou acide (c'est-à-dire ayant fixé un proton) et éventuellement ajuster le pH par l'ajout d'une base forte, telle que la potasse (KOH) ou la soude (NaOH). Ainsi, lorsque la base faible selon l'invention est un sel de carbonate, la première solution peut être préparée en ajoutant du Na₂CO₃, ou du K₂CO₃, et/ou du NaHCO₃, ou du KHCO₃, et éventuellement en ajustant le pH à l'aide de potasse et/ou de 3 soude.

### Extraction des graisses

L'extraction des graisses selon l'invention comprend de préférence une étape de chauffage à une température inférieure à 100°C, notamment de 75°C à 85°C, éventuellement en présence d'agents facilitant l'extraction des graisses, tels que des agents acides, suivie d'un pressage. Selon l'invention, cette extraction des graisses peut avoir lieu préalablement à la première étape ou simultanément à la première étape, ce dernier cas pouvant présenter des avantages industriels.

### Première étape

De préférence, le mélange est incubé pendant au moins 1, 2, 3, 4, 5, 10, 20 ou 30 minutes avant la mise en oeuvre de la deuxième étape. On préfère également, que la première étape ait une durée de moins de deux heures, plus préférablement de moins d'une heure.

Par ailleurs, la température d'incubation du mélange avant la mise en oeuvre de la deuxième étape est de préférence inférieure à 50°C, 45°C, 40°C, 30°C. De préférence également, la température d'incubation du mélange avant la mise en oeuvre de la deuxième étape est de préférence supérieure à 10°C ou 15°C. Ainsi, de manière particulièrement préférée l'incubation du mélange avant la mise en oeuvre de la deuxième étape est effectuée à température ambiante. Comme cela apparaitra clairement à l'homme du métier la température ambiante peut varier en fonction de la région géographique dans laquelle il est mis en oeuvre, de la saison ou de l'heure de la journée. Dans une définition particulière selon l'invention, toutefois, l'expression « température ambiante » vise préférentiellement des températures de 18°C à 25°C.

Par ailleurs, lorsque la première étape comprend une extraction des graisse, et comme l'homme du métier le comprendra bien, la température d'incubation peut être augmentée jusqu'à une température supérieure à 50°C, mais inférieure à 100°C, et de préférence de 75°C à 85°C. En outre, lorsque la première étape comprend une extraction des graisses, la mise en contact de la base faible selon l'invention avec le produit animal peut avoir lieu en totalité avant l'extraction des graisses, en totalité après l'extraction des graisses, en totalité au cours de l'extraction des graisses, ou encore en partie avant, après, et éventuellement pendant l'extraction des graisses.

De manière préférée également, la première étape est conduite à la pression atmosphérique, c'est-à-dire à environ 1 bar.

### Deuxième étape

La deuxième étape du procédé de traitement décontaminant, comprend un chauffage principal à une température à coeur d'au moins 100°C, de préférence à une température d'au moins 105°C, 110°C ou 115°C , et inférieure à 121°C pendant une durée de 5 à 15 minutes.

L'homme du métier sait bien mesurer la température « à coeur » c'est-à-dire au sein du mélange. Cela peut être réalisé, par exemple, en plongeant une sonde de température dans le mélange, de manière à s'assurer qu'essentiellement tout le mélange à atteint la température visée.

Par ailleurs, on préfère que le chauffage principal de la deuxième étape ait une durée de 8 à 12 minutes.

Comme l'homme du métier le comprendra bien, la deuxième étape peut comprendre d'autres chauffages additionnels que le chauffage principal. Il peut notamment s'agir de palier ayant une température inférieure à 100°C avant d'atteindre la température du chauffage principal.

En outre, dans un mode de réalisation préféré de l'invention, le chauffage principal est suivi d'au moins un chauffage additionnel à une température supérieure ou égale à 121 °C, notamment à une température de 131°C à 138°C. Le chauffage additionnel a de préférence une durée de 1 minute à 20 minutes, plus préférablement de 1 minute à 18 minutes.

Dans un autre mode de réalisation préféré de l'invention, le procédé de l'invention ne comprend pas de chauffage additionnel à une température supérieure ou égale à 121 °C

Par ailleurs, on préfère que le procédé de traitement décontaminant selon l'invention soit conduit dans des conditions de chauffage telles que la quantité d'eau extraite du produit animal soit inférieur à 20% (en g pour 100 g), plus préférablement inférieure à 15% (en g pour 100 g) de la masse du produit animal mis en contact avec la base faible dans la première étape. De préférence, l'éventuel volume d'eau apportée par une base faible en solution selon l'invention n'est pas comptabilisé dans le calcul de ce pourcentage, c'est-à-dire que la quantité d'eau extraite du produit animal se réfère à la quantité d'eau présente dans le produit animal avant la mise en contact d'une base faible en solution selon l'invention avec le produit animal.

Par ailleurs, de manière préférée également, la première étape est conduite à une pression d'au moins la pression atmosphérique et d'au plus 2 bar, plus préférablement à la pression atmosphérique, c'est-à-dire environ 1 bar.

Le pH du mélange à l'issue de la deuxième étape est supérieur ou égal à 9 et inférieur à 11, plus préférablement supérieur ou égal à 9,5 et inférieur ou égal à 10,5.

Comme on l'entend ici, le pH est mesuré dans les conditions de laboratoire de température et de pression, notamment à une température de 20°C à 25 °C et à la pression atmosphérique, en particulier à une pression d'environ 1 bar.

### Homogénéisation du mélange

Par ailleurs, comme cela apparaitra clairement à l'homme du métier, le mélange est de préférence homogénéisé, par exemple par agitation ou malaxage.

### Procédé d'obtention de PAT

Les procédés d'obtention de protéines animales transformées (PAT) à partir de produits animaux, notamment de sous-produits animaux, sont bien connus de l'homme du métier. Ces procédés comprennent typiquement une étape de broyage du produit animal, notamment du sous-produit animal, suivie d'une étape d'extraction de graisse, par chauffage modéré, notamment à environ 80°C, et pressage, le produit animal broyé et dégraissé obtenu est alors généralement séché, par exemple par extrusion, pour donner des protéines animales transformées. Le procédé de traitement décontaminant selon l'invention prend place simultanément à ou après l'étape d'extraction de graisse, sur le produit animal broyé, et avant l'étape de séchage.

Dans un mode de réalisation préféré de l'invention, le procédé d'obtention de PAT selon l'invention est réalisé à partir de produits animaux de catégories 1, 2 ou 3 au sens du Règlement (CE) n°1774/2002 du parlement européen et du conseil du 3 octobre 2002, notamment à partir de produits animaux de catégorie 1, en particulier à risque de prion.

A ce titre, on préfère que lorsque les PAT selon l'invention sont obtenues à partir de produits animaux de catégories 1, 2 ou 3 au sens du Règlement (CE) n°1774/2002 du parlement européen et du conseil du 3 octobre 2002, notamment à partir de produits animaux de catégorie 1, en particulier à risque de prion, alors elles sont utilisées à titre d'engrais.

Dans un autre mode de réalisation préféré de l'invention, le procédé d'obtention de PAT selon l'invention est réalisé à partir d'insectes, notamment nourris par des produits animaux de catégories 1, 2 ou 3 au sens du Règlement (CE) n°1774/2002 du parlement européen et du conseil du 3 octobre 2002, notamment à partir de produits animaux de catégorie 1, en particulier à risque de prion.

A ce titre, on préfère que lorsque les PAT selon l'invention sont obtenues à partir d'insectes, notamment nourris par des produits animaux de catégories 1, 2 ou 3 au sens du Règlement (CE) n°1774/2002 du parlement européen et du conseil du 3 octobre 2002, notamment à partir de produits animaux de catégorie 1, en particulier à risque de prion, alors elles sont utilisées pour nourrir des poissons.

L'invention sera davantage explicitée de manière non limitative à l'aide des figures et des exemples qui suivent.

### Description des figures

### Figure 1

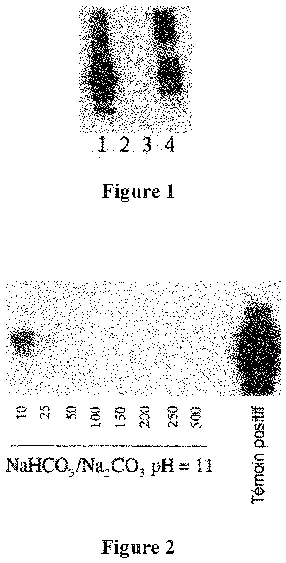

La Figure 1 représente la quantité de PrPres, mise en évidence par western blot, extraite d'un macérât de cerveau de hamster infecté par la souche 263K mis en contact avec de l'eau (piste 1), une solution carbonate/bicarbonate pH=11 (piste 2), une solution de soude à 5 M (piste 3) et une solution de soude à 0,5 M (piste 4), et soumis à un chauffage de 5 minutes à 60°C, puis 3 minutes à 115°C sous 10 bars de pression.

### Figure 2

La Figure 2 représente la quantité de PrPres, mise en évidence par western blot, extraite d'un macérât de cerveau de hamster infecté par la souche 263K mis en contact avec des concentrations variables d'une solution carbonate/bicarbonate pH=11 (de 10 à 500 mM), incubés à température ambiante pendant 20 minutes, chauffés à 100°C pendant 2 minutes, puis à 115°C pendant 10 minutes.

### Figure 3

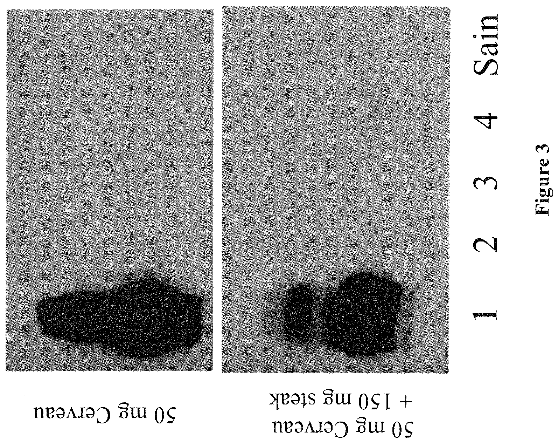

La figure 3 représente la quantité de PrPres mise en évidence par Western Blot, dans des essais comprenant une étape préalable (test 1) ou simultanée à la première étape (test 2) de dégraissage des produits animaux.

La piste 1 correspond à un témoin négatif (traitement de l'échantillon à l'eau) ; la piste 2 illustre les résultats obtenus dans le cas d'une extraction des graisses préalablement à la première étape de mise en contact avec une base faible (Na₂CO₃/NaHCO₃ pH11ou C11) ; les pistes 3 et 4 correspondent à un procédé selon l'invention mettant en oeuvre une extraction des graisses simultanée à la première étape.

### EXEMPLES

Les données expérimentales ont été générées au moyen de modèles *in vitro* (recherche de la PrPres, marqueur spécifique des maladies à prion), et à l'aide de bio-essais (inoculation à l'animal de laboratoire) afin d'augmenter la sensibilité de l'analyse d'une part, et obtenir des réponses en termes d'infectiosité d'autre part. Compte tenu de l'influence que peut avoir l'environnement organique des prions (effet tampon, protection en cas de cuisson), les études ont été réalisées sur des extraits de cerveau plus ou moins concentrés, mais également en présence de matrice animale (viande), pour mimer au mieux la matière première d'intérêt, à savoir des sous-produits animaux (SPA).

### Matériels et méthodes

### Modèle d'infection à prion

La majorité des études a été réalisée dans le modèle d'infection expérimentale de hamster infecté par la souche de tremblante 263K (Kimberlin & Walker (1977) J. Gen. Virol. 34:295-304). Ce modèle rapide (mortalité au bout de 80 jours après inoculation d'une charge de 10⁸ unités infectieuses) présente l'avantage d'un titre infectieux important, et un spectre de résistance réputé important. Cette souche est utilisée comme modèle de référence pour les études d'inactivation des prions.

Les études *in vivo* ont été doublées dans deux modèles de souris transgéniques :
- le premier modèle repose sur l'inoculation d'une souche de tremblante ovine adaptée à la souris transgénique surexprimant la PrP ovine (allèle VRQ/VRQ, souche Tg338, Vilotte et al. (2001) J. Virol. 75:5977-5984). Cette souche (TAC) induit une mortalité au bout de 60 jours chez la souris Tg338 ;
- le second modèle consiste dans l'inoculation de la souche d'ESB bovine à la souris transgénique surexprimant la PrP bovine (Castilla et al. (2003) Arch. Virol. 148:677-691).

### Préparation des sources infectieuses et des matrices

Les sources infectieuses correspondent soit :
1- à des macérâts de cerveau, appelés « macérât 100% », obtenus par trituration d'un cerveau entier sans dilution dans un tampon ;
2- à des homogénats de cerveau 20% (poids/volume) dans une solution de glucose à 5%, appelés « homogénat 20% glucose », obtenus par broyage mécanique d'un fragment de cerveau (x milligrammes) dans 4x microlitres d'une solution glucosé 5%
3- à des homogénats de cerveau 20% (poids/volume) dans l'eau, appelés « homogénat 20% eau», obtenus par broyage mécanique d'un fragment de cerveau (x milligrammes) dans 4x microlitres d'eau

Les matrices utilisées pour mimer les sous-produits animaux (SPA) correspondent soit à de la viande bovine hachée du commerce (15% de matière grasse), soit à des SPA de hamster ou de souris, obtenus par hachage d'une carcasse dépecée entière.

La contamination artificielle des SPA avec une quantité connue de matériel infectieux a été réalisée soit de façon homogène par trituration, soit de façon hétérogène par addition d'un fragment de cerveau au sein d'une boulette de matrice.

### Préparation des solutions pour la mise en oeuvre de la première étape du procédé de l'invention et mesures du pH

Les solutions de base faible ont été préparés à 20°C à l'aide de Na₂CO₃ (carbonate de sodium), de NaHCO₃ (bicarbonate de sodium) et éventuellement de soude (NaOH) ; les pH indiqués correspondent soit au pH de la solution (pH solution), soit au pH mesuré immédiatement après mélange de ladite solution avec l'échantillon à traiter (pH initial), soit au pH mesuré au terme du traitement dans sa totalité (pH final).

Les pH sont mesurés au pH-mètre (Knick 766). Dans la mesure où les volumes de tampon ajouté peuvent varier, la concentration des tampons est exprimée systématiquement en concentration finale après mélange avec la matrice à traiter soit (nombre de moles de Na₂CO₃ + nombre de mole de NaHCO₃)/volume du mélange.

### Modélisation-miniaturisation des process

Les mélanges des différents produits à traiter avec les différentes solutions chimiques ont été réalisés de la façon la plus homogène possible, soit par mélange à la pipette, soit par trituration.

Les traitements thermiques sont réalisés sous contrôle permanent de la température à l'aide d'un thermocouple (Hanna Instruments) prenant la température au coeur du produit et dans le tampon de cuisson.

### Analyse in vitro de la PrPres

Les échantillons ont été purifiés sous la forme d'homogénat 20% (poids/volume). Pour cela, les macérâts ont été broyés dans 4 volumes de solution glucosée à 5%. La PrPres contenue dans ces échantillons a été purifiée au moyen des réactifs du test CEA-BioRad (Barret et al. (2003) J. Virol. 77:8462-8469), puis détectée par western blot, selon le protocole décrit précédemment (Lasmezas et al. (1996) J. Gen. Virol. 77:1601-1609). Après purification, les échantillons ont été resuspendus à l'aide d'un tampon Laemmli (Laemmli, (1970) Nature 227:680-685), et l'équivalent de 5 mg de cerveau a été déposé sur un gel de polyacrylamide et transféré sur une membrane de nitrocellulose (Schleicher & Schuell).

La révélation a été réalisée au moyen d'un anticorps monoclonal reconnaissant spécifiquement la PrP murine (SAF-60, Féraudet et al. (2005) J. Biol. Chem. 280:11247-11258). Un anticorps de chèvre anti-souris couplé à la peroxydase a été utilisé comme anticorps secondaire (Southern Biotechnology Associates), et l'immunoréactivité a été mise en évidence par chimiluminescence au moyen du kit ECL Amersham et détectée par autoradiographie.

### Inoculation à l'animal de laboratoire

Les animaux anesthésiés ont été inoculés par voie intra-cérébrale à l'aide de 50 µl (hamster) ou 20 µl (souris) des produits à tester. Pour chaque traitement et chaque groupe contrôle, de 4 à 8 animaux ont été inoculés.

Le titre infectieux a été établi sur la base des dates de décès et du constat du stade terminal. L'examen clinique est relié à l'observation des signes pathognomoniques des encéphalopathies subaiguës spongiformes transmissibles.

Avant l'apparition des premiers signes cliniques dans les groupes témoins (jusqu'au 50^{ème} jour pour les hamsters et les souris transgéniques sureprimant la PrP ovine, 150^{ème} jour pour les souris surexprimant la PrP bovine), les animaux de tous les groupes ont été observés cliniquement une fois par semaine. À partir de ces dates et jusqu'à la fin de l'étude, les examens cliniques ont été pratiqués trois fois par semaine.

Les signes cliniques sont de cinq ordres :
- Troubles du comportement (excitabilité, troubles de la nidation et du toilettage),
- Perte du réflexe de positionnement visuel,
- Ataxie cérébelleuse, démarche anormale, prostration,
- Obésité puis amaigrissement,
- Paraplégie puis tétraplégie.

Les observations ont été consignées après chaque examen clinique, et les signes cliniques et les décès enregistrés. Les animaux au stade terminal de la maladie ont été euthanasiés pour limiter la souffrance.

En cas de mort des animaux inoculés avec les produits traités, la moyenne du temps de survie de ces groupes a été comparée à la moyenne des temps de survie des animaux dans les groupes contrôles (animaux inoculés avec des dilutions croissantes du matériel infectieux initial chauffé à 100°C pendant 3 minutes). Il est alors possible d'estimer la charge infectieuse résiduelle après traitement, et de déterminer ainsi le niveau de réduction apporté par ce traitement.

Dix-huit mois après l'inoculation (fin de l'étude) des différents produits, tous les animaux survivants ont été euthanasiés. Les cerveaux de ces animaux ont été prélevés, et la quantité de PrPres éventuellement présente dans ces cerveaux a été estimée au moyen d'une technique biochimique (ELISA ou Western blot). Les cerveaux de certains animaux décédés au cours de l'expérimentation ont également été étudiés à l'aide de ce test biochimique.

### Exemple 1

Un fragment de cerveau de hamster infecté par la souche 263K (50 mg) a été mélangé avec 5 microlitres d'eau, de soude ou d'une solution carbonate/bicarbonate. Les différents mélanges ont alors été incubés 5 minutes à 60°C, puis 3 minutes à 115°C sous 10 bars de pression.

On observe dans la Figure 1 que la quantité de PrPres détectée au terme du chauffage en eau n'est que peu modifiée (ligne 1), tandis que l'addition d'une solution de soude à 5M initiale (ligne 3), qui permet de monter le pH du cerveau à 13, élimine toute trace de PrPres. En revanche, l'addition de soude à 0,5M de concentration initiale (ligne 4), qui ajuste le pH du cerveau à 11,ne réduit que très peu la quantité de PrPres. De façon surprenante, l'addition de la solution carbonate/bicarbonate (1 M de concentration initiale) (ligne 2) à pH=11 selon le procédé de l'invention, permet également d'éliminer toute trace de PrPres.

### Exemple 2

Différentes substances chimiques en solution (hydroxyde de sodium NaOH, bicarbonate de sodium NaHCO₃, carbonate de sodium Na₂CO₃), seules ou en association, et à différentes concentrations, ont été additionnées dans la proportion de 33 % (poids/volume) à différentes matrices (cerveau de veau, viande hachée ou cerveau de hamster infecté par la souche 263K). En pratique, 1 ml de solution a été ajouté à 2 grammes de matrice.

Après mélange homogène, ce dernier est incubé pendant 20 minutes à température ambiante, chauffé 2 minutes à 100°C puis 10 minutes à 115°C.

Les pH des différentes solutions ont été mesurés. Dans le cas de la matrice correspondant à du cerveau de veau, le pH a été mesuré immédiatement après mélange, avant chauffage (au terme des 20 minutes d'incubation à température ambiante), et après chauffage. Après mélange de ces solutions avec de la viande hachée, le pH a été mesuré après chauffage, et la quantité d'eau éliminée lors du traitement a été estimée par mesure de la perte de poids de la boulette de viande. Après mélange de ces solutions avec du cerveau de hamster infecté par la souche 263K, la quantité de PrPres résiduelle a été estimée.

Les résultats sont présentés dans le Tableau 1 suivant.

**Tableau 1 : Effet de différentes solutions alcalines sur le pH, l'hydratation et la réduction de la PrPres. Les concentrations mentionnées correspondent à la concentration du produit après mélange avec la matrice**

| | | Cerveau veau | | | Viande hachée | | 263K |
|---|---|---|---|---|---|---|---|
| Produit | pH solution | pH initial | pH avant chauffage | pH final | pH final | Evolution poids | Réduction PrPres |
| Na₂CO₃/NaHCO₃ 150 mM pH11 | 11,00 | 9,98 | 9,87 | 9,96 | 9,65 | +7% | > 3,5 logs |
| Na₂CO₃/NaHCO₃ 150 mM pH10 | 9,83 | 9,56 | 9,48 | 9,76 | 9,30 | -3 % | > 3,5 logs |
| Na₂CO₃/NaHCO₃ 150 mM pH9,5 | 9,34 | 8,99 | 8,94 | 9,75 | 9,61 | -10% | > 3,5 logs |
| NaOH 50 mM + Na₂CO₃/NaHCO₃ 100 mM pH10 | 12,20 | 9,81 | N.D. | 9,77 | 9,58 | +7% | > 3,5 logs |
| H₂O | | 6,65 | 6,68 | 6,75 | 6,44 | -42% | 0,5 log |

On observe tout d'abord que le procédé de l'invention permet de réduire la quantité de PrPres dans le cerveau de hamster infecté par la souche 263K à un niveau indétectable (Réduction > 3,5 logs). A ce titre, on note que d'une façon surprenante, l'absence de PrPres détectable ne dépend pas du pH initial du tampon utilisé, ni du pH de la matrice après addition dudit tampon (pH initial) mais du pH obtenu après chauffage (pH final), qui est compris entre 9 et 10 dans cet exemple. Par ailleurs, on observe que le procédé de l'invention permet de maintenir un niveau d'hydratation convenable de la viande hachée, objectivée par une faible perte de masse après traitement, contrairement au témoin (eau).

Les traitements présentés en Tableau 1 conduisent aux effets observés suivants sur la charge infectieuse d'un homogénat de cerveau (Tableau 2) :

**Tableau 2 : Effet de différentes solutions alcalines sur l'infectiosité des prions. Les concentrations mentionnées correspondent à la concentration du produit après mélange avec la matrice**

| Produit | pH solution | Réduction PrPres | Animaux | % mortalité | Période incubation | Réduction titre infectieux |
|---|---|---|---|---|---|---|
| Na₂CO₃/NaHCO₃ 150 mM pH11 | 11,00 | > 3,5 logs | 3/7 | 43% | 490 ± 39 | >5 |
| Na₂CO₃/NaHCO₃ 150 mM PH10 | 9,83 | > 3,5 logs | | | | |
| Na₂CO₃/NaHCO₃ 150 mM pH9,5 | 9,34 | > 3,5 logs | 5/6 | 83 % | 352 ± 89 | >5 |
| NaOH 50 mM + Na₂CO₃/NaHCO₃ 100 mM pH10 | 12,20 | > 3,5 logs | | | | |
| H₂O | | 0,5 log | 8/8 | 100% | 105 ±6 | 1,5 |

### Exemple 3

Dans cet exemple, la solution carbonate/bicarbonate, à un pH initial de 11, a été additionnée à un macérât de cerveau à des concentrations variables, dans la proportion de 33% (poids/volume). En pratique, 25 microlitres de solution ont été ajoutés à 50 mg de cerveau.

Après mélange homogène et incubation à température ambiante pendant 20 minutes, le mélange a été chauffé à 100°C pendant 2 minutes, puis à 115°C pendant 10 minutes. Les résultats sont présentés dans la Figure 2.

On observe que pour toutes les conditions avec une concentration de solution carbonate/bicarbonate supérieure ou égale à 50 mM, la disparition de PrPres est complète. Dans ce dispositif expérimental, pour les concentrations de 10 mM et 25 mM, qui ne permettent pas d'atteindre un pH après chauffage de 8,5, la destruction est incomplète.

### Exemple 4

Dans cet exemple, des matrices mimant les sous-produits animaux (SPA) (SPA de hamster ou de souris, obtenus par hachage d'une carcasse dépecée entière) ont été contaminées de façon artificielle avec une quantité connue de matériel infectieux (50 mg de cerveau titrant 10¹⁰ DL50/g pour 150 mg de SPA, soit une matrice contenant 25% (masse/masse) de matériel infectieux) de façon homogène par trituration. Ces échantillons infectieux ont été mélangés soit avec de l'eau, soit avec un tampon carbonate/bicarbonate à pH=11 à 100 mM pendant 20 minutes à température ambiante (première étape), puis chauffés pendant 3 minutes à 115°C à l'autoclave (deuxième étape).

Après administration à l'animal, on observe alors une réduction de l'infectiosité, caractérisée par une durée d'incubation longue de 240 ± 88 jours avant la déclaration des signes cliniques (contre 107 ± 4 jours avec une incubation dans l'eau), ce qui correspond à une réduction de l'infectiosité de 5 à 6 log, c'est-à-dire un facteur 10⁻⁵-10⁻⁶.

Une expérience similaire réalisée avec le prion de l'encéphalopathie spongiforme bovine à titre d'agent infectieux donne une durée d'incubation longue supérieure à 567 jours (contre 345 ± 24 jours avec une incubation dans l'eau), ce qui correspond à une réduction d'infectiosité de 4 log, c'est-à-dire un facteur 10⁻⁴.

### Exemple 5

### 1. Test 1 : Dégraissage préalable à la première étape

Ce test a consisté à ajouter à 20 grammes de sous-produits animaux (matière crue multi-espèce C3, déchets de boucherie) 2 ml (soit 10 % volume/poids) d'eau ou de Na₂CO₃/NaHCO₃ pH11 (C11) à 1,5M (150 mM final). Après chauffage à coeur pendant 40 minutes à 80°C, le pressage a permis d'obtenir 6 ml de liquide dont 1,5 ml de graisse.

L'effet de ce protocole sur la PrPres a été étudié sur du cerveau de hamster 263K seul ou mélangé avec de la viande de boeuf (1 volume de cerveau pour 3 volumes de viande). En pratique, 50 mg de cerveau + 150 mg de viande ont été mélangés à 20 µl d'eau, puis chauffés à 80°C pendant 40 minutes. Quarante microlitres de substance alcaline (ou d'eau) ont été ajoutés, puis le tout est chauffé à 115°C pendant 5 minutes.

Cet essai montre que le dégraissage préalable du produit animal ne modifie pas l'action de la substance alcaline, mise en oeuvre dans les conditions de l'invention, dans la décontamination du prion.

Les résultats sont illustrés à la figure 3, pistes 1 (eau) et 2 (C11).

### 2. Test 2 : Dégraissage simultané à la première étape

Le protocole proposé dans ce contexte est le suivant :
Mélange de la matrice à décontaminer avec une fraction de la substance alcaline ;
Incubation pendant 20 minutes à température ambiante pour permettre une bonne pénétration du produit à coeur ;
Chauffage pendant 40 minutes à 80°C à coeur ;
Pressage et élimination du liquide et des graisses évacuées ;
Ajout de la fraction restante de la substance alcaline (base faible) identique à celle du test 1 ;
Chauffage 5 minutes à 115°C.

En pratique, 50 mg de cerveau + 150 mg de viande ont été mélangés avec 20 microlitres de substance alcaline. Après attente et chauffage à 80°C pendant 40 minutes, 40 microlitres de substance alcaline complémentaire ont été ajoutés, puis le tout est chauffé à 115°C pendant 5 minutes.

Les résultats sont illustrés à la figure 3, pistes 3 et 4.

Cet essai montre que le dégraissage simultané du produit animal ne modifie pas l'action de la substance alcaline, mise en oeuvre dans les conditions de l'invention, (y compris lorsque l'ajout de la base faible est réalisé en deux fois), dans la décontamination du prion.

**Tableau 3 résumant les conditions des tests 1 et 2**

| **Pistes** **figure 3** | **Premier traitement (au cours dégraissage)** | **Second traitement (après dégraissage, ci-dessus appelé première étape du procédé de décontamination)** |
|---|---|---|
| 1 | Eau | Eau |
| 2 | Eau | C11 150 mM |
| 3 | C11 150 mM | C11 150 mM |
| 4 | C11 30 mM | C11 170 mM |

## Revendications

1. Procédé de traitement décontaminant de produits animaux comprenant les étapes suivantes :
- une extraction des graisses desdits produits animaux, préalablement à la première étape ;
- une première étape de mise en contact desdits produits animaux dégraissés avec au moins une base faible ayant un pKa compris entre 9 et 12 pour former un mélange ;
- une deuxième étape comprenant au moins un chauffage principal du mélange à une température à coeur d'au moins 100°C et inférieure à 121 °C pendant une durée de 5 à 15 minutes, ledit chauffage principal étant un chauffage humide ;
dans lequel le pH du mélange à l'issue de la deuxième étape est supérieur ou égal à 9 et inférieur à 11.

2. Procédé de traitement décontaminant de produits animaux comprenant les étapes suivantes :
- une extraction des graisses desdits produits animaux, simultanément à la première étape de mise en contact desdits produits animaux avec au moins une base faible ayant un pKa compris entre 9 et 12 pour former un mélange ;
- une deuxième étape comprenant au moins un chauffage principal du mélange à une température à coeur d'au moins 100°C et inférieure à 121°C pendant une durée de 5 à 15 minutes, ledit chauffage principal étant un chauffage humide ;
dans lequel le pH du mélange à l'issue de la deuxième étape est supérieur ou égal à 9 et inférieur à 11.

3. Procédé selon la revendication 1 ou la revendication 2, dans lequel la base faible est un sel de carbonate.

4. Procédé selon l'une des revendications 1 à 3, dans lequel la quantité de la base faible et des formes acides ou basiques conjuguées de la base faible éventuellement mises en contact avec le produit animal conjointement à la base faible, rapportée au volume du mélange, est inférieure à 1 mol.L⁻¹.

5. Procédé selon l'une des revendications 1 à 4, dans lequel la quantité de la base faible et des formes acides ou basiques conjuguées de la base faible éventuellement mises en contact avec le produit animal conjointement à la base faible, rapportée au volume du mélange, est d'au moins 100 mmol.L⁻¹.

6. Procédé selon l'une des revendications 1 à 5, dans lequel la base faible est apportée sous forme de poudre ou sous forme de solution.

7. Procédé selon la revendication 6, dans lequel la solution de base faible présente un pH d'au moins 10,5.

8. Procédé selon l'une des revendications 1 à 7, dans lequel le mélange est incubé pendant au moins 10 minutes avant la mise en oeuvre de la deuxième étape.

9. Procédé selon la revendication 8, dans lequel la température d'incubation du mélange avant la mise en éoeuvre de la deuxième étape est inférieure à 50°C.

10. Procédé selon l'une des revendications 1 à 9, dans lequel le chauffage principal est suivi d'un chauffage additionnel à une température supérieure ou égale à 121°C.

11. Procédé selon l'une des revendications 1 à 10, dans lequel le produit animal est broyé préalablement à la première étape de manière à obtenir une granulométrie moyenne inférieure à 100 mm.

12. Procédé selon l'une des revendications 1 à 11, dans lequel le produit animal est un sous-produit animal.

13. Procédé selon l'une des revendications 1 à 12, dans lequel le traitement décontaminant est un traitement décontaminant du prion.

14. Procédé d'obtention de protéines animales transformées (PAT), comprenant la mise en oeuvre du procédé de traitement décontaminant de produits animaux selon l'une des revendications 1 à 13.

15. Procédé d'obtention de protéines animales transformées selon la revendication 14, dans lequel, lesdits produits animaux sont des produits animaux de catégorie 1 au sens du Règlement (CE) n°1774/2002, en particulier des produits animaux à risque de prion.

## Patentansprüche

1. Verfahren zur Dekontaminationsbehandlung von tierischen Produkten, das folgende Schritte umfasst:
- Eine Extraktion der Fette der tierischen Produkte vor dem ersten Schritt;
- einen ersten Schritt mit Zusammenführung der entfetteten tierischen Produkte mit zumindest einer schwachen Base mit einem pKa von zwischen 9 und 12 zur Bildung einer Mischung;
- einen zweiten Schritt, der zumindest eine Haupterhitzung der Mischung auf eine Kerntemperatur von mindestens 100 °C und unter 121 °C für eine Dauer von 5 bis 15 Minuten umfasst,
wobei die Erhitzung eine nasse Erhitzung ist;
wobei der pH-Wert der Mischung nach dem zweiten Schritt über oder gleich 9 und unter 11 beträgt.

2. Dekontaminationsverfahren für tierische Produkte, das folgende Schritte umfasst:
- eine Extraktion der Fette der tierischen Produkte gleichzeitig mit dem ersten Schritt mit Zusammenführung der tierischen Produkte mit zumindest einer schwachen Base mit einem pKa von zwischen 9 und 12 zur Bildung einer Mischung;
- einen zweiten Schritt, der zumindest eine Haupterhitzung der Mischung auf eine Kerntemperatur von mindestens 100 °C und unter 121 °C für eine Dauer von 5 bis 15 Minuten umfasst,
wobei die Erhitzung eine nasse Erhitzung ist;
wobei der pH-Wert der Mischung nach dem zweiten Schritt über oder gleich 9 und unter 11 beträgt.

3. Verfahren nach Anspruch 1 oder Anspruch 2, wobei die schwache Base ein Karbonatsalz ist.

4. Verfahren nach einem der Ansprüche 1 bis 3, wobei die Menge der schwachen Base und der verbundenen sauren oder basischen Formen der schwachen Base, die eventuell mit dem tierischen Produkt gemeinsam mit der schwachen Base im verhältnis zum Volumen der Mischung zusammengerührt werden, unter 1 mol.L⁻¹ beträgt.

5. Verfahren nach einem der Ansprüche 1 bis 4, wobei die Menge der schwachen Base und der verbundenen sauren oder basischen Formen der schwachen Base, die eventuell mit dem tierischen Produkt gemeinsam mit der schwachen Base im Verhältnis zum Volumen der Mischung zusammengeführt werden, mindestens 100 mmol.L⁻¹ beträgt.

6. Verfahren nach einem der Ansprüche 1 bis 5, wobei die schwache Basis in Form eines Pulvers oder als Lösung beigefügt wird.

7. Verfahren nach Anspruch 6, wobei die Lösung der schwachen Base einen pH-Wert von mindestens 10,5 aufweist.

8. Verfahren nach einem der Ansprüche 1 bis 7, wobei die Mischung vor der Umsetzung des zweiten Schritts mindestens 10 Minuten lang inkubiert wird.

9. Verfahren nach Anspruch 8, wobei die Inkubationstemperatur der Mischung vor der Umsetzung des zweiten Schritts unter 50 °C beträgt.

10. Verfahren nach einem der Ansprüche 1 bis 9, wobei die Hauptheizung durch eine Zusatzheizung mit einer Temperatur von unter oder gleich 121 °C gefolgt wird.

11. Verfahren nach einem der Ansprüche 1 bis 10, wobei das tierische Produkt vor dem ersten Schritt gemahlen wird, damit eine mittlere Teilchengröße von unter 100 mm erzielt wird.

12. Verfahren nach einem der Ansprüche 1 bis 11, wobei das tierische Produkt ein tierisches Nebenprodukt ist.

13. Verfahren nach einem der Ansprüche 1 bis 12, wobei die Dekontaminationsbehandlung eine Dekontaminationsbehandlung von Prion ist.

14. Verfahren zur Gewinnung von verarbeiteten tierischen Proteinen (PAT), das die Umsetzung des Verfahrens zur Dekontaminationsbehandlung von tierischen Produkten nach einem der Ansprüche 1 bis 13 umfasst.

15. Verfahren zur Gewinnung von verarbeiteten tierischen Proteinen nach Anspruch 14, wobei die tierischen Produkte solche der Kategorie 1 im Sinne der Verordnung (EG) Nr. 1774/2002, insbesondere tierische Produkte mit Gefahr von Prion, sind.

## Claims

1. A method for the decontaminating treatment of animal products, comprising the following steps:
- extracting fats from said animal products prior to the first step;
- a first step to contact said defatted animal products with at least one weak base having a pKa of between 9 and 12 to form a mixture;
- a second step comprising at least one primary heating of the mixture at a core temperature of at least 100 °C and lower than 121 °C for a time of 5 to 15 minutes,
said primary heating being moist heating;
wherein the pH of the mixture after the second step is 9 or higher and lower than 11.

2. A method for the decontaminating treatment of animal products, comprising the following steps:
- extracting fats from said animal products simultaneously with the first contacting step of said animal products with at least one weak base having a pKa of between 9 and 12 to form a mixture;
- a second step comprising at least one primary heating of the mixture at a core temperature of at least 100 °C and lower than 121 °C for a time of 5 to 15 minutes
said primary heating being moist heating;
wherein the pH of the mixture after the second step is 9 or higher and lower than 11.

3. The method according to claim 1 or claim 2, wherein the weak base is a carbonate salt.

4. The method according to one of claims 1 to 3, wherein the amount of weak base and conjugate acid or base forms of the weak base optionally contacted with the animal product concomitantly with the weak base, relative to the volume of the mixture, is less than 1 mol.L⁻¹.

5. The method according to one of claims 1 to 4, wherein the amount of weak base and conjugate acid or base forms of the weak base optionally contacted with the animal product concomitantly with the weak base, relative to the volume of the mixture, is at least 100 mmol.L⁻¹.

6. The method according to one of claims 1 to 5, wherein the weak base is provided in powder form or in the form of a solution.

7. The method according to claim 6, wherein the solution of weak base has a pH of at least 10.5.

8. The method according to one of claims 1 to 7, wherein the mixture is incubated for at least 10 minutes before implementing the second step.

9. The method according to claim 8, wherein the incubation temperature of the mixture before implementing the second step is lower than 50°C.

10. The method according to one of claims 1 to 9, wherein the primary heating is followed by additional heating at a temperature of 121°C or higher.

11. The method according to one of claims 1 to 10, wherein the animal product is milled prior to the first step, to obtain a mean particle size of less than 100 mm.

12. The method according to one of claims 1 to 11, wherein the animal product is an animal by-product.

13. The method according to one of claims 1 to 12, wherein the decontaminating treatment is prion decontaminating treatment.

14. A process to obtain processed animal proteins (PAP) comprising the implementation of the method for decontaminating treatment of animal products according to one of claims 1 to 13.

15. The process to obtain processed animal proteins according to claim 14, wherein said animal products are category 1 animal products in the meaning of Regulation (EC) N° 1774/2002, in particular animal products carrying a prion risk.
